# EUROPEAN PATENT APPLICATION

(11) **EP 3 010 153 A1**
(43) Date of publication of application: **20.04.2016**
(21) Application number: 14188650.7
(22) Date of filing: 13.10.2014
(51) Int. Cl.: H04B 1/38, A42B 3/30, H04M 1/05

(54) **Communication system for a helmet**

(71) Applicant: Cardo International GmbH, 81677 München (DE)
(72) Inventor: Glezerman, Abraham, 4366250 Ra'anana (IL); Ashkenazy, Albert, 4366250 Ra'anana (IL); Moato, Avi, 4366250 Ra'anana (IL); Sherman, Yael, 4366250 Ra'anana (IL)
(74) Representative: Weickmann & Weickmann PartmbB

(57) **Abstract**

A communication system (10) for a helmet (12), in particular for a motorcycle helmet, comprises a communication device (14), and at least one audio transducer (32, 34, 40) operatively connected to said communication device (14). According to the invention, said communication device (14) includes bayonet coupling members (16) for detachably coupling said communication device (14) to the outer surface (12b) of the external shell (12a) of the helmet (12).

## Description

### Technical Field

The present invention relates to a communication system for a helmet, and in particular to a communication system for a helmet which is worn during various activities and provides a wired or wireless connection to the helmet from a separate source of intercommunication (bidirectional communication), e.g., a mobile phone, or an entertainment system or navigation system (unidirectional communication).

### Background

It will be appreciated that there are number of different types of helmets that are used across many different industries; however, they all are a form of protective gear. For example, wearing hard hats is standard practice when working in construction site, as well as when operating heavy industrial equipment, etc.. Sports athletes, such as baseball and football players, also wear helmets for protection and it is one of the most critical pieces of equipment for a professional race car driver. Helmets are also used in the military services. One type of helmet that is one of the more commonly seen is a motorcycle helmet. Motorcycle riding helmets are very sophisticated and specialized for the activity.

In recent years, helmet wearers have been offered various choices according to which audio content can be delivered to and transmitted from a helmet, such as a motorcycle or racing car helmet, for example, but not intended to exclude other types of helmets and applications.

As is well known, Bluetooth is a technology standard designed for wireless data exchange in the globally unlicensed IMS band between a wide variety of mobile and stationary devices. Among others, the Bluetooth profile is also used for communication between a mobile phone and a hands-free headset that allows the transfer of sound data between the two devices.

The applicant of the present invention is a designer and manufacturer of a line of products that are commercially available under the trade name "scala rider". This product is a wireless communication unit that the end-user attaches to a helmet for the purpose of interfacing with the Bluetooth functionality of the user's mobile phone. The scala rider product includes a headset unit (wireless communication unit) that contains among others the electronic components, e.g. an embedded Bluetooth chip, the antenna, the battery, various buttons and mechanical man-machine interfaces. To mount the entire headset unit onto the helmet and fasten it securely a clamp is being used. The clamp mount also has an electronic connector portion and includes a boom-mounted or wired microphone and two wired speakers that the end user positions onto the inner lining of the helmet. The clamp unit resembles a cradle that receives the headset unit such that contacts of the headset unit are electrically connected to contacts of the electronic connector portion of the clamp unit. The clamp unit serves as the base unit for the headset and is attached to the helmet before using the headset.

The clamp unit is typically attached to the helmet by loosening screws of the clamp unit and then sliding a back-plate of the clamp unit between the internal padding and the external shell of the helmet. The clamp unit is adjusted to a desired horizontal location for the user where the speaker or one of the speakers sits opposite the user's ear and the microphone is located opposite the user's mouth. The screws are then fastened to lock the clamp unit in place. Then the headset is slid along a carrier-plate of the clamp until it snap-lockingly mates therewith. To remove the headset unit (e.g., for charging or security purposes), an elastically deformable flap of the carrier-plate is pressed to allow the headset unit to slide up.

Furthermore, EP 2 112 768 A2 discloses a communication system that fits within the confines of a helmet, and in particular a neckpad communication system comprising a neckpad body that includes coupling members for detachably coupling the neckpad body to a surface of the helmet, and a communication unit having a first part that is disposed within and covered by the neckpad body and is configured to permit audio communication with another remote device and a second part including audio transducers located at least partially outside the neckpad body, the audio transducers being operatively connected to the communication unit.

Moreover, US 2006/0034477 A1 discloses a clamp-less mounting assembly for attaching an internal headset to one of a plurality of different types of external electronic audio communications devices to a helmet. The external audio communications devices communicate with an internal headset by way of electrical conductors inherent in a mounting post which is inserted through a hole in the helmet's shell. A lock-nut is screwed onto an external thread of the mounting post in order to secure the mounting post to the external shell of the helmet.

While the above products perform their intended function, there is a perceived need to provide a communication device that may be mounted to and dismounted from a helmet in an easier and quicker manner.

### Summary

According to the present invention, this need is met by a communication system for a helmet, in particular for a motorcycle helmet, comprising a communication device, and at least one audio transducer operatively connected to said communication device, wherein said communication device includes bayonet coupling members for detachably coupling said communication device to the outer surface of the helmet's shell.

Thanks to the use of bayonet coupling members that, preferably, protrude from the back-side of the communication device, the latter can easily, quickly and single-handedly be mounted to and released from the helmet. The user mounting the communication device to the helmet simply inserts the latter's bayonet coupling members into the mating counter-coupling cavities of the helmet's bayonet mount, and by a simple, for example clockwise, turn of his wrist securely engages the coupling and counter-coupling members of the bayonet mount of the communication device and the helmet. Similarly, the process of releasing the communication device from the helmet is achieved by grasping the communication device followed by a, for example counter-clockwise, turn of the user's wrist.

Although it is conceivable that the counter-coupling members allocated to the helmet are provided in a base element which is permanently attached, e.g. glued or otherwise fixed on the external surface of the helmet's shell, it is preferable that said counter-coupling members allocated to the helmet and adapted for engagement with said bayonet coupling members of the communication device are integrally formed in the helmet's external shell.

As drilling holes into the outer shell of the helmet would compromise the latter's homologation, and other safety related attributes, it is preferable that the counter-coupling members allocated to the helmet are provided in the helmet's external shell already during the manufacturing process of the helmet.

Some helmet manufacturers are designing helmets with ornamental emblems attached to the outside surface of the outer shell thereof by means of a bayonet mount. And, after removal of said emblems, the helmet-side bayonet counter-coupling members of said bayonet mount may be used for engagement with mating bayonet coupling members of the communication device. For example, Korean helmet manufacturer HJC is distributing helmets having a Harley Davidson emblem attached in this way to the helmet. It is, however, also conceivable that the helmet-side bayonet counter-coupling members of said bayonet mount are covered by a cover having a neutral appearance.

For example, said bayonet coupling members may include a first pin adapted to be inserted into a substantially circular hole formed in the shell of the helmet and adapted for serving as a rotatonal axis, and at least one second pin offset from said first pin at a predetermined distance, adapted for being inserted into a corresponding bayonet connection hole formed in the shell of the helmet, and being provided, at or adjacent its free end, with a lateral projection, said bayonet connection hole comprising a first portion shaped and adapted for allowing insertion of said second pin as well as said lateral projection thereof in a direction extending substantially orthogonal to the helmet's surface, and a second portion shaped and adapted for allowing shifting of said second pin from said first portion to said second portion, but preventing retraction of said second pin and said second pin's lateral projection from said helmet in a direction extending substantially orthogonal to the helmet's surface.

In order to be able to provide a bayonet coupling having substantially balanced operating forces, it is preferable that said bayonet coupling members include two second pins being arranged at opposite sides of said first pin. If at least one of said first pin and said at least one second pin is a hollow pin including a channel extending along the pin's axis, it is possible to guide at least a part of the electrical wiring for connecting the at least one audio transducer to the communication device directly from the communication device through the bayonet coupling to the interior side of the helmet's shell.

Furthermore, it is conceivable that the first pin of said bayonet coupling members is constituted by an element of a plug-and-socket connection. According to this construction, the electrical and mechanical connections may be effected simultaneously. Said element of said plug-and-socket connection may, for example, be a jack of the TS- or TRS- or TRRS-type.

It is, however, also conceivable that the electrical wiring extends from the communication device downward to the lower edge of the helmet, and around this lower edge to the inside of the helmet where at least one of the audio transducers is located.

Due to the previously described simplicity of the mounting and dismounting process, the communication device may easily be dismounted from the helmet in its entirety, e.g. for theft prevention reasons.

As discussed before, the applicant of the present invention developed for its line of communication devices, also known as scala rider, a two-component concept according to which the communication device comprises a cradle unit and an electronic unit. The continued use of this two-component concept also in the context of the present invention could result in reduced manufacturing costs for the communication system according to the present invention, as only the cradle unit would have to be adapted to the bayonet coupling concept, whereas the electronic unit could be used without any change. For this reason, it may be advantageous that said communication device comprises a cradle unit including said bayonet coupling members, and a separate electronic unit, said cradle unit and said electronic unit including co-operating coupling elements for detachably coupling said electronic unit to said cradle unit.

As the electronic unit is the most valuable part of the communication system and its dismounting from the helmet will provide a sufficiently effective theft prevention, it is proposed that at least one audio transducer is, preferably all audio transducers are, operatively connected to said cradle unit.

In order to allow for a secure connection of said electronic unit to said cradle unit, said co-operating coupling elements for detachably coupling said electronic unit to said cradle unit may include at least one of co-operating guiding elements and co-operating snap fasteners.

Furthermore, said electronic unit and said cradle unit may include a plurality of pairs of co-operating electrical contacts for electrically connecting said at least one audio transducer to said electronic unit. Preferably, the electrical and mechanical connections of the cradle unit and the electronic unit may be effected simultaneously, if said pairs of cooperating electrical contacts are adapted to be engaged with each other when mechanically coupling said electronic unit to said cradle unit.

The same concept may also be applied to the cradle unit and the at least one audio transducer. In particular said audio transducers and said cradle unit may include a plurality of further pairs of cooperating electrical contacts for electrically connecting at least one of said audio transducers to said cradle unit.

Furthermore, said further pairs of co-operating electrical contacts may be adapted to be engaged with each other when mechanically coupling said cradle unit to the helmet.

In a unidirectional communication system, e.g. for entertainment or navigation purposes, the at least one audio transducer may include at least one speaker, whereas in a bidirectional communication system, e.g. for responding to a telephone call, the at least one audio transducer may include at least one speaker and a microphone. In the latter case, the microphone may include a flexible boom that is coupled to the cradle unit.

According to a further embodiment of the present invention, the at least one speaker may include a mechanical fastener that permits the speaker to be detachably fastened to an inner surface of a comfort padding of the helmet, preferably at a position adjacent to the wearer's ear. The mechanical fastener may, for example, be constituted by a hook-and-loop fastener.

Preferably, the communication system according to the present invention may further include controls that are operatively connected to the electronic unit and adapted to control activation of the electronic unit and the volume of the at least one speaker. These controls may be located at the outer surface of a housing of the electronic unit.

According to a further embodiment of the present invention, the electronic unit supports Bluetooth and/or other wireless communication technologies.

According to a second aspect, the present invention refers to a combination of a helmet, in particular a motorcycle helmet, and a communication system according to the present invention.

According to a third aspect, the present invention refers to a method for attaching a communication system to a helmet, in particular a motorcycle helmet, having a cover attached to the outer surface of its shell by means of a bayonet mount, said method comprising the steps of:
- turning the cover around a bayonet axis of said bayonet mount in a predetermined rotational direction by a predetermined angle from a fixed state to a loosened state,
- removing the cover from the helmet,
- approaching to said helmet the communication device of a communication system according to the present invention whose bayonet coupling members mate with the counter-coupling members of the helmet's bayonet mount,
- inserting said bayonet coupling members into said counter-coupling members of the helmet's bayonet mount, and
- turning said communication device around said bayonet axis of said bayonet mount in a rotational direction opposite to said predetermined rotational direction by said predetermined angle from a loosened state to a fixed state.

From the foregoing it will be understood that the communications unit can coordinate signals in analog or digital form between the audio transducers (microphone, speakers, etc.) associated with the communication device of the present invention and other communication devices. For instance, the communication unit can coordinate signals from a cellular phone having a compliant communication protocol (e.g., Bluetooth or other radio frequency technologies). Also, the communication device can coordinate signals provided by multiple compliant devices, such as music players (MP3) and navigation systems (e.g., the type that provide aural navigation instructions). Coordination can include muting one audio source or assigning priorities as between the various devices.

### Brief Description of the Drawings

The foregoing and other features and advantages of the present invention will be more readily apparent from the following detailed description and drawings of the illustrative embodiments of the invention:
- Figure 1: shows a perspective view of a first embodiment of a communication system for a motorcycle helmet;
- Figure 2: shows a side view of a second embodiment of a communication system for a motorcycle helmet; and
- Figure 3: shows a cradle unit and an electronic unit of the communication system of the embodiment of Figure 2.

### Detailed Description of Embodiments

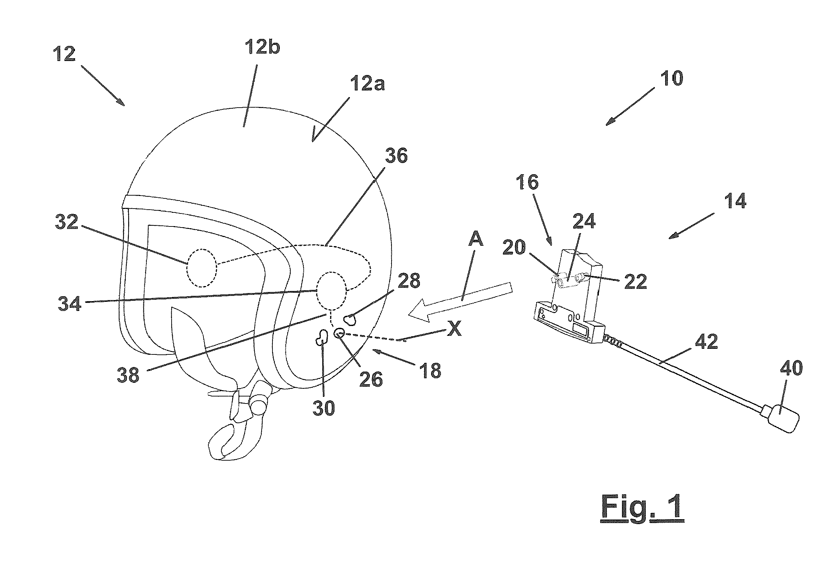

In Figure 1 a communication system according to a first embodiment of the present invention is indicated by reference numeral 10. In particular, Figure 1 shows a perspective view of a motorcycle helmet 12 and a communication device 14 of the communication system 10 in a state in which the communication device 14 is separated from the helmet 12.

The communication device 14 comprises bayonet coupling members 16 intended for cooperation with mating bayonet counter-coupling members 18 of the helmet 12 for allowing the communication device 14 to be attached to the outer surface 12a of the outer shell 12b of the helmet 12. In the embodiment shown in Figure 1, the bayonet coupling members 16 include two bayonet coupling pins 20 and 22 and a central guiding pin 24. When approaching the communication device 14 to the helmet 12, as indicated by arrow A, first the guiding pin 24 is inserted into a mating guiding cavity 26 of the helmet 12, followed by the insertion of the bayonet coupling pins 20 and 22 into mating bayonet coupling cavities 28 and 30 of the helmet 12. By a short clockwise rotation of the communication device 14 relative to the helmet 12 around bayonet axis X and thus activating the cooperation of the bayonet coupling and counter-coupling members, the communication device 14 may be securely fastened to the helmet 12.

In the embodiment of Figure 1, the guiding cavity 26 and the bayonet coupling cavities 28 and 30 are integrally formed in the outer shell 12b of the helmet 12.

When attaching the communication device 14 to the helmet 12, the cooperation of the guiding pin 24 and the mating guiding cavity 26 of the first embodiment may automatically establish the electrical connection of the communication device 14 to two speakers 32 and 34 which are located inside the helmet 12 at or at least close to the positions where the ears of the wearer of the helmet 12 will be located. This may, for example, be achieved by constructing the guiding pin 24 and the mating guiding cavity 26 as plug-and-socket connecting members.

The electrical wiring connecting the two speakers 32 and 34 is indicated by 36, and the electrical wiring connecting the speakers 32, 34 to the plug-and-socket connecting members by 38. Furthermore, a microphone 40 is connected via a, preferably flexible, boom 42 to the communication device 14.

The communication device 14, the speakers 32, 34 and the microphone 40 together constitute the communication system 10. The speakers 32, 34 and the microphone 40 constitute audio transducers of the communication system 10.

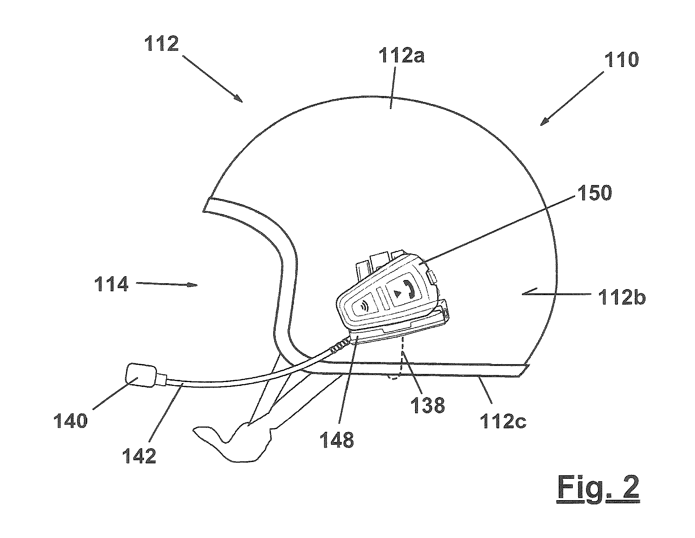

In Figure 2 a second embodiment of a communication system according to the present invention is shown. As the second embodiment differs only slightly from the first embodiment, analogous parts are designated by the same reference numerals as in Figure 1, but increased by 100. Moreover, the second embodiment will be described only with respect to those features which differ from the first embodiment, whereas, with respect to the features which are identical to those of Figure 1, it is explicitly referred to the description of Figure 1.

In particular, Figure 2 shows a side view of a motorcycle helmet 112 and a communication device 114 of the communication system 110 in a state in which the communication device 114 is attached to the helmet 112.

A first difference between the embodiments shown in Figures 1 and 2 resides in the fact that, whereas the communication device 14 of Figure 1 is an integrally formed device, the communications device 114 of Figure 2 includes a cradle unit 148 and an actual electronic unit 150 which may be detachably coupled to each other. And, as a second difference, the electrical wiring 138 connecting the communication device 114 to the speakers (not shown in Figure 2) is guided around the lower edge 112c of the outer shell 112b of the helmet 112.

With respect to the first difference, it is to be noted that the integrally formed communication device 14 of the embodiment of Figure 1 is a relatively large part which is rather cumbersome to stow in a pocket of trousers or a jacket. In contrast to that, the electronic unit 150 of the embodiment of Figure 2 is a relatively small part which is easy to stow in a pocket.

The second difference allows to adopt the inventive concept also to helmets 112 which, although providing the bayonet counter-coupling members (not shown in Figure 2) in their outer shell 112a do not provide corresponding through holes through the protective padding provided at the inner surface of the helmet's shell 112a. As drilling holes into the protective padding would compromise the helmet's homologation, it is necessary to guide the electrical wiring 138 connecting the communication device 114 to the speakers (not shown in Figure 2) around the lower edge 112c of the outer shell 112b of the helmet 112. As a consequence, the guiding pin (not shown) and the corresponding guiding cavity (not shown) do not provide any plug-and-socket functionality.

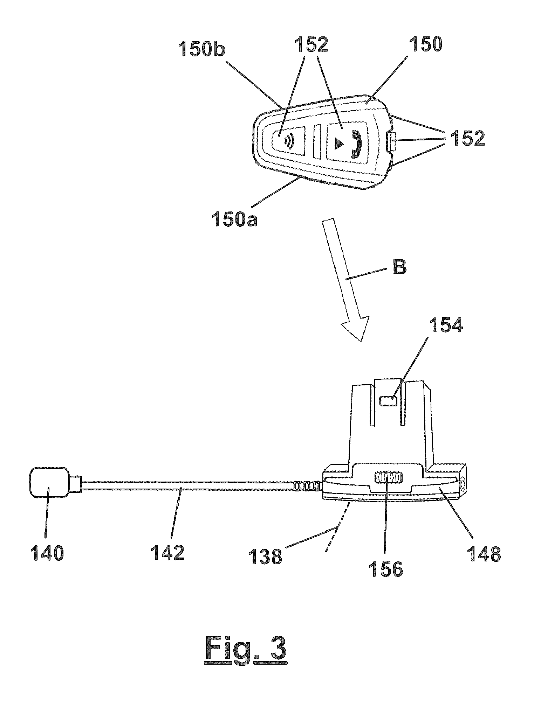

Figure 3 shows the cradle unit 148 and the electronic unit 150 in a state in which they are separated from each other. As is shown in Figure 3, the boom 142 carrying the microphone 140 is connected to the cradle unit 148. Moreover, the electrical wiring 138 connecting the communication device 114 to the speakers (not shown) is also connected to the cradle unit 148. In contrast, the control keys 152 for operating the communication system 110 are provided at the electronic unit 150. And, as the electronic unit 150 furthermore includes the electronic components, e.g. the embedded Bluetooth chip, the antenna and the battery, it constitutes the most valuable part of the communication device. Thus, the dismounting only of the electronic unit 150 will provide a sufficiently effective theft prevention.

When approaching the electronic unit 150 to the cradle unit 148, as indicated by arrow B, it will be form-fittedly held by the cradle unit 148 at its lower end 150a and by snap-fastening means 154 at its upper end 150b. Moreover, when attaching the electronic unit 150 to the cradle unit 148 electrical contact elements 156 of the cradle unit 148 and electrical contact elements (not shown) of the electronic unit 150 will be automatically connected to each other, thus providing together with the microphone 140 and the speakers (not shown) a fully operative bi-directional communication system 110.

Although two specific embodiments have been described above, it should be noted that also combinations of both embodiments are conceivable. In particular, it is possible to connect an integrally formed communication device 14 (as in the embodiment of Figure 1) by an electrical wiring 138 guided around the lower edge 112c of the helmet 112 (as in the embodiment of Figure 2) to the speakers. Furthermore, it is conceivable to use a cradle unit 148 (as in the embodiment of Figure 2) together with a helmet, wherein the guiding pin of the cradle unit 148 and the guiding cavity 26 of the helmet 12 provide plug-and-socket functionality like in the embodiment shown in Figure 1.

## Claims

1. A communication system (10) for a helmet (12), in particular for a motorcycle helmet, comprising:
• a communication device (14), and
• at least one audio transducer (32, 34, 40) operatively connected to said communication device (14),
**characterized in that** said communication device (14) includes bayonet coupling members (16) for detachably coupling said communication device (14) to the outer surface (12b) of the external shell (12a) of the helmet (12).

2. The communication system according to claim 1, wherein counter-coupling members (18) allocated to the helmet (12) and adapted for engagement with said bayonet coupling members (16) of the communication device (14) are integrally formed in the external shell (12a) of the helmet (12).

3. The communication system according to claim 1 or 2, wherein said bayonet coupling members (16) include a first pin (24) adapted to be inserted into a substantially circular hole (26) formed in the external shell (12a) of the helmet (12) and adapted for serving as a rotatonal axis (X), and at least one second pin (20, 22) offset from said first pin (24) at a predetermined distance, adapted for being inserted into a corresponding bayonet connection hole (28, 30) formed in the external shell (12a) of the helmet (12), and being provided, at or adjacent its free end, with a lateral projection.

4. The communication system according to claim 3, wherein said bayonet coupling members (16) include two second pins (20 and 22) being arranged at opposite sides of said first pin (24).

5. The communication system according to claim 3 or 4, wherein the first pin (24) of said bayonet coupling members (16) is constituted by an element of a plug-and-socket connection.

6. The communication system according to claim 3 or 4, wherein the electrical wiring (138) extends from the communication device (114) downward to the lower edge (112c) of the helmet (112), and around this lower edge (112c) to the inside of the helmet (112) where at least one of the audio transducers is located.

7. The communication system according to any of claims 1 to 7, wherein said communication device (114) comprises
• a cradle unit (148) including said bayonet coupling members, and
• a separate electronic unit (150), said cradle unit (148) and said electronic unit (150) including co-operating coupling elements (154) for detachably coupling said electronic unit (150) to said cradle unit (148).

8. The communication system according to claim 7, wherein at least one audio transducer (140) is, preferably all audio transducers are, operatively connected to said cradle unit (148).

9. The communication system according to claim 7 or 8, wherein said co-operating coupling elements (154) for detachably coupling said electronic unit (150) to said cradle unit (148) include at least one of co-operating guiding elements and co-operating snap fasteners (154).

10. The communication system according to any of claims 7 to 9, wherein said electronic unit (150) and said cradle unit (148) include a plurality of pairs of co-operating electrical contacts (156) for electrically connecting said at least one audio transducer (140) to said electronic unit (150).

11. The communication system according to any of claims 1 to 10, wherein the at least one audio transducer includes at least one speaker (32, 34), and preferably a microphone (40).

12. The communication system according to any of claims 1 to 11, further including controls (152) that are operatively connected to the electronic unit (150) and adapted to control activation of the electronic unit (150) and the volume of the at least one speaker.

13. The communication system according to any of claims 1 to 12, wherein the electronic unit (150) supports Bluetooth and/or other wireless communication technologies.

14. A combination of a helmet (12), in particular a motorcycle helmet, and a communication system (10) according to any of claims 1 to 13.

15. A method for attaching a communication system (10) to a helmet (12), in particular a motorcycle helmet, having a cover attached to the outer surface (12b) of its external shell (12) by means of a bayonet mount, said method comprising the steps of:
• turning the cover around a bayonet axis (X) of said bayonet mount in a predetermined rotational direction by a predetermined angle from a fixed state to a loosened state,
• removing the cover from the helmet (12),
• approaching to said helmet (12) the communication device (14) of a communication system (10) according to any of claims 1 to 13 whose bayonet coupling members (16) mate with the counter-coupling members (18) of the helmet's bayonet mount,
• inserting said bayonet coupling members (16) into said counter-coupling members (18) of the helmet's bayonet mount, and
• turning said communication device (14) around said bayonet axis (X) of said bayonet mount in a rotational direction opposite to said predetermined rotational direction by said predetermined angle from a loosened state to a fixed state.
